# EUROPÄISCHE PATENTSCHRIFT

(11) **EP 2 409 141 B1**
(45) Veröffentlichungstag und Bekanntmachung des Hinweises auf die Patenterteilung: **20.03.2013**
(21) Anmeldenummer: 10700710.6
(22) Anmeldetag: 08.01.2010
(51) Int. Cl.: G01N 21/77, G01N 21/45

(54) **Sensoranordnung und Detektionsverfahren**
Sensor arrangement and detection method
Agencement de capteur et procédé de détection

(30) Priorität: 16.03.2009 DE 102009013878
(43) Veröffentlichungstag der Anmeldung: 25.01.2012
(73) Patentinhaber: Fraunhofer-Gesellschaft zur Förderung der angewandten Forschung e.V., 80686 München (DE)
(72) Erfinder: HEIDRICH, Helmut, 12357 Berlin (DE); LÜTZOW, Peter, 107817 Berlin (DE)
(74) Vertreter: Pfenning, Meinig & Partner GbR
(86) Internationale Anmeldenummer: PCT/EP2010/000184
(87) Internationale Veröffentlichungsnummer: WO 2010/105716

(56) Entgegenhaltungen:
- DE-C1- 4 138 222
- KLOTZ A ET AL: "Channel waveguide mode beat interferometer" SENSORS AND ACTUATORS B, ELSEVIER SEQUOIA S.A., LAUSANNE, CH LNKD- DOI:10.1016/S0925-4005(97)80225-0, Bd. 39, Nr. 1-3, 1. März 1997 (1997-03-01) , Seiten 310-315, XP004087763 ISSN: 0925-4005
- KOSTER T ET AL: "Fully integrated optical polarimeter" SENSORS AND ACTUATORS B, ELSEVIER SEQUOIA S.A., LAUSANNE, CH LNKD- DOI:10.1016/S0925-4005(01)01008-5, Bd. 82, Nr. 2-3, 28. Februar 2002 (2002-02-28), Seiten 213-226, XP004343652 ISSN: 0925-4005
- LUKOSZ W ET AL: "Difference interferometer with new phase-measurement method as integrated-optical refractometer, humidity sensor and biosensor" SENSORS AND ACTUATORS B, ELSEVIER SEQUOIA S.A., LAUSANNE, CH LNKD- DOI:10.1016/S0925-4005(97)80226-2, Bd. 39, Nr. 1-3, 1. März 1997 (1997-03-01) , Seiten 316-323, XP004087764 ISSN: 0925-4005
- FATTINGER CH ET AL: "THE DIFFERENCE INTERFEROMETER: A HIGHLY SENSITIVE OPTICAL PROBE FOR QUANTIFICATION OF MOLECULAR SURFACE CONCENTRATION" BIOSENSORS AND BIOELECTRONICS, ELSEVIER BV, NL LNKD- DOI:10.1016/0956-5663(93)80058-W, Bd. 8, 1. Januar 1993 (1993-01-01), Seiten 99-107, XP000847609 ISSN: 0956-5663
- ALBRECHT P ET AL: "TE/TM MODE SPLITTERS ON INGAASP/INP" IEEE PHOTONICS TECHNOLOGY LETTERS, IEEE SERVICE CENTER, PISCATAWAY, NJ, US LNKD- DOI:10.1109/68.47064, Bd. 2, Nr. 2, 1. Februar 1990 (1990-02-01) , Seite 114/115, XP000114161 ISSN: 1041-1135
- HEIDRICH H: "PASSIVE MODE CONVERTER WITH A PERIODICALLY TILTED INP/GAINASP RIB WAVEGUIDE" IEEE PHOTONICS TECHNOLOGY LETTERS, IEEE SERVICE CENTER, PISCATAWAY, NJ, US LNKD- DOI:10.1109/68.124867, Bd. 4, Nr. 1, 1. Januar 1992 (1992-01-01), Seiten 34-36, XP000244563 ISSN: 1041-1135

## Beschreibung

Die Erfindung betrifft eine optische Sensoranordnung nach dem Oberbegriff des Hauptanspruchs sowie ein Detektionsverfahren, das mit einer derartigen Sensoranordnung durchgeführt werden kann und mit dem das Vorhandensein oder eine Konzentration eines Stoffes oder eine mechanische Belastung detektierbar ist.

Die veröffentlichung "Channel waveguide mode beat interferometer" von Albrecht Klotz et al. auf den Seiten 310-315 in Sensors and Actuators B, 38-39 (1997) offenbart eine gattungsgemäße Sensoranordnung mit einem monomodalen, doppelbrechenden Messwellenleiter, der eine in Abhängigkeit von einer Messgröße veränderliche Doppelbrechung zeigt, sowie einer optischen Auswerteeinheit, die einen polarisierenden Strahlteiler umfasst, von dem zwei optische Arme ausgehen, wobei der Messwellenleiter einem optischen Eingang des polarisierenden Strahlteilers vorgeschaltet ist und an einem dem Strahlteiler gegenüberliegenden Ende jedes der beiden Arme ein lichtempfindliches Element vorgesehen ist.

Andere optische Anordnungen, die dem gleichen Technikgebiet zuzuordnen sind wie die hier beschriebene Erfindung, sind bekannt aus den Veröffentlichungen "Fully integrated optical polarimeter", T. Koster und P. Lambeck, Sensors and Actuators B, 82 (2002), Seiten 213-226, "Difference interferometer with new phase-measurement method as integrated-optical refractometer, humidity sensor and biosensor", W. Lukosz et al., Sensors and Actuators B, 38-39 (1997), Seiten 316-323, und "The difference interferometer: a highly sensitive optical probe for quantification of molecular surface concentration", Ch. Fattinger et al., Biosensors & Bioelectronics, 8 (1993), Seiten 99-107.

Eine in der Druckschrift DE 41 38 222 C1 beschriebene Sensoranordnung aus dem Stand der Technik umfasst einen Messwellenleiter, der eine in Abhängigkeit von einer Messgröße veränderliche Doppelbrechung zeigt, sowie eine optische Auswerteeinheit mit zwei durch Wellenleiter realisierten optischen Armen, die einen Mach-Zehnder-Interferometer bilden, und einem optischen Koppler zum Zusammenführen von in den zwei Armen geführtem Licht, wobei mindestens ein Ausgang des Kopplers optisch mit mindestens einem lichtempfindlichen Element verbunden ist. Dabei sei als Mach-Zehnder-Interferometer in der vorliegenden Schrift ganz allgemein eine optische Anordnung bezeichnet, die zwei verschiedene, von einem Strahlteiler ausgehende und zur zumindest teilweisen Überlagerung wieder zusammengeführte optische Pfade aufweist.

In der Druckschrift DE 41 38 222 C1 wird vorgeschlagen, einen Phasenversatz zu messen, der unter Einfluss einer zu messenden Größe innerhalb des als integrierte Optik realisierten Mach-Zehnder-Interferometers zustande kommt. Ein sensitiver Bereich dieses Sensors kann daher nicht räumlich von der auch elektrische Komponenten enthaltenden integrierten Optik getrennt angeordnet werden, weshalb sich ein Einsatz des Sensors in einer Umgebung verbietet, die auf Elektrizität empfindlich reagiert. Da der sensitive Bereich innerhalb eines Pfades des Mach-Zehnder-Interferometers angeordnet ist, sind seiner räumlichen Ausdehnung wiederum enge Grenzen gesetzt, die damit auch eine Sensitivität des Sensors nachteilig begrenzen.

Der Erfindung liegt also die Aufgabe zugrunde, eine vergleichbare Sensoranordnung zu schaffen, die diese Nachteile vermeidet und für verschiedene Aufgaben anpassbare und insbesondere hohe Messempfindlichkeiten zu realisieren erlaubt, wobei ein Einsatz auch in bezüglich elektrischer Felder oder elektrischer Leiter kritischen Umgebungen möglich sein soll. Der Erfindung liegt ferner die Aufgabe zugrunde, ein entsprechend vorteilhaftes Verfahren zum Detektieren eines Stoffes oder einer mechanischen Belastung vorzuschlagen.

Diese Aufgabe wird erfindungsgemäß gelöst durch eine Sensoranordnung mit den kennzeichnenden Merkmalen des Hauptanspruchs in Verbindung mit den Merkmalen des Oberbegriffs des Hauptanspruchs sowie durch ein Detektionsverfahren mit den Merkmalen des Anspruchs 14. Vorteilhafte Ausgestaltungen und Weiterentwicklungen der Erfindung ergeben sich mit den Merkmalen der abhängigen Ansprüche.

Dadurch, dass die Auswerteeinheit einen polarisierenden Strahlteiler umfasst, von dem die genannten optischen Arme ausgehen, wobei der Messwellenleiter einem optischen Eingang des polarisierenden Strahlteilers vorgeschaltet ist und wobei in einem Verlauf eines der optischen Arme ein Polarisationskonverter angeordnet ist, kann ein Phasenversatz zwischen zwei Polarisationsanteilen eines Lichtbündels, der innerhalb des Messwellenleiters zustande kommt, davon räumlich getrennt durch den Mach-Zehnder-Interferometer erfasst werden. Als Strahlteiler sei dabei ein Modensplitter bezeichnet, mit dem typischerweise zwei Grundeigenmoden zweier zueinander orthogonaler Polarisationen getrennt werden, wobei ein Eingang und zwei Ausgänge des Modensplitters durch Wellenleiter gebildet werden, der Strahlteiler also nicht als Freistrahlanordnung ausgeführt sein soll. Die vorgeschlagenen Maßnahmen erlauben damit in vorteilhafter Weise eine räumlich von der Auswerteeinheit und damit auch von allen elektrischen Komponenten getrennte Anordnung des Messwellenleiters, der z.B. durch einen polarisationserhaltenden Wellenleiter mit der Auswerteeinheit verbunden sein kann. Auch kann der Messwellenleiter weitgehend beliebig gestaltet und insbesondere mit beliebiger Länge ausgeführt werden, wodurch sich für verschiedene Anwendungen jeweils geeignete und insbesondere auch sehr hohe Empfindlichkeiten der Sensoranordnung realisieren lassen.

Der polarisierende Strahlteiler, der zur Einspeisung von Lichtanteilen verschiedener Polarisation in die beiden Arme ausgelegt ist, wird typischerweise als sogenannter TE/TM-Splitter ausgeführt sein, also derart, dass er ein eingespeistes Lichtbündel in zwei zueinander orthogonal linear polarisierte Komponenten zerlegt, von denen eine TE-polarisiert und eine TM-polarisiert ist. Dementsprechend kann der Polarisationskonverter als TE/TM-Modenkonverter ausgeführt sein.

Ein entsprechend vorteilhaftes Detektionsverfahren, das je nach Ausführung des Messwellenleiters sowohl zum Detektieren eines Vorhandenseins oder einer Konzentration eines Stoffes als auch zum Detektieren einer mechanischen Belastung verwendet werden kann und das sich mit einer Sensoranordnung hier beschriebener Art durchführen lässt, sieht vor, dass Licht mit zwei orthogonalen Polarisationsanteilen in einen Messwellenleiter eingespeist wird, der für diese Polarisationen eine in Abhängigkeit von einer Anlagerung des Stoffes und/oder der mechanischen Belastung veränderliche Doppelbrechung, also unterschiedliche Brechungsindizes für diese Anteile, zeigt - z.B. durch ein Einspeisen des Lichts mit einer um 45° gegenüber Hauptachsen des Messwellenleiters geneigten linearen Polarisation. Nach einem Verlassen des Messwellenleiters werden die zwei Anteile getrennt und durch zwei verschiedene optische Arme geleitet, wo die Polarisation zumindest eines dieser Anteile geändert wird, und zwar so, dass an einem Ausgang dieses Arms und des anderen Arms Licht mit Komponenten gleicher Polarisation austritt. An einem Ausgang der beiden Arme werden die beiden Anteile schließlich wieder überlagert, wobei durch Intensitätsmessung einer Überlagerung der beiden Anteile eine Phasenverschiebung zwischen den beiden Anteilen detektiert wird. Ein Überlagern der beiden Anteile wird dabei durch das Ändern der Polarisation in zumindest einem der Arme möglich, wozu der Polarisationskonverter der vorgeschlagenen Sensoranordnung vorgesehen ist.

Um eine solches Detektionsverfahren zu ermöglichen, weist die vorgeschlagene Sensoranordnung vorzugsweise ferner eine linear polarisierte, monochromatische Laser-Lichtquelle zum Einspeisen von polarisiertem Licht in den Messwellenleiter auf, die so ausgeführt und angeordnet ist, dass das in den Messwellenleiter eingespeiste Licht Anteile zweier derart verschiedener Polarisationen enthält, dass durch den Strahlteiler in jeden der beiden Arme der Auswerteeinheit jeweils einer dieser Anteile geleitet wird. Ferner werden der Messwellenleiter und der Strahlteiler vorzugsweise so relativ zueinander orientiert, dass zwei durch den Strahlteiler in die verschiedenen Arme geleitete Lichtanteile so polarisiert sind, dass diese Lichtanteile im Messwellenleiter mit jeweils einem definierten - wenn auch jeweils von der Messgröße abhängigen - Brechungsindex propagieren, also typischerweise jeweils parallel zu einer optischen Hauptachse des Messwellenleiters linear polarisiert sind. Beide Anteile sollten möglichst mit gleicher Intensität eingespeist werden, was z.B. durch Einspeisen des Lichts mit einer um 45° gegenüber den Hauptachsen des Messwellenleiters geneigten linearen Polarisation erreicht werden kann.

Ein vorteilhaft kompakter und robuster Aufbau der Sensoranordnung ergibt sich, wenn zumindest die Auswerteeinheit als integrierte Optik ausgeführt ist, bei der Strahlteiler, die optischen Arme mit dem Polarisationskonverter und der Koppler, eventuell auch das mindestens eine lichtempfindliche Element, auf einem gemeinsamen planaren Substrat angeordnet sind, von dem sie typischerweise durch einen optischen Puffer getrennt sind. Dieses Substrat kann z.B. aus einem Teil eines Wafers und beispielsweise aus Silizium oder Lithiumniobat gebildet werden, wobei die Auswerteeinheit auch auf Waferebene, also vor einem Trennen des Wafers in zahlreiche Chips, hergestellt werden kann. Möglich ist insbesondere eine Herstellung in SOI-Technik. Kerne der Wellenleiter können z.B. durch Rippen oberhalb des Substrats oder des Puffers realisiert sein. Als TE-polarisiert sei in diesem Fall eine Lichtwelle mit einem parallel zum Substrat orientierten elektrischem Feld, als TM-polarisiert eine Lichtwelle mit parallel zum Substrat orientiertem magnetischen Feld bezeichnet.

Wenn die Sensoranordnung zum Detektieren eines Stoffes geeignet sein soll, kann der Messwellenleiter eine selektive Schicht zum Anlagern dieses Stoffes tragen. So kann die Sensoranordnung insbesondere als Biosensor ausgeführt werden. Geeignete Materialien für die selektive Schicht sind an sich hinlänglich bekannt, verwiesen sei z.B. auf den Artikel "Optical Biosensors" von S.M. Borisov und O.T. Wolfbeis, Chem. Rev. 2008, 108, 423-461. Das Anlagern des Stoffes soll dabei einen polarisationsabhängigen Einfluss auf in dem Messwellenleiter transportiertes Licht haben, weshalb die selektive Schicht nicht auf allen Seiten und vorzugsweise nur auf einer Oberseite des Messwellenleiters aufzubringen ist.

Alternativ oder zusätzlich kann die Sensoranordnung auch zur Erfassung einer mechanischen Belastung ausgelegt sein. Damit diese einen Einfluss auf eine Doppelbrechung des Messwellenleiters hat, kann der Messwellenleiter dazu zumindest streckenweise frei schwebend ausgeführt werden, z.B. als Cantilever, wozu eine Unterlage des Messwellenleiters stellenweise weggeätzt werden kann.

Indem ein Kern des Messwellenleiters aus einem optisch einachsigen Material, wie z.B. Lithiumniobat, gebildet wird, lässt sich erreichen, dass dieser auch in einem Ausgangszustand, in dem er nicht mit dem zu detektierenden Stoff belegt oder nicht belastet ist, doppelbrechend ist. Alternativ oder zusätzlich kann der Messwellenleiter zu diesem Zweck auch einen anisotropen Querschnitt haben, z.B. bei einer Ausführung als Rippenwellenleiter auf einem planaren Substrat, und eventuell zusätzlich einer mechanischen Vorspannung ausgesetzt werden. Eine besonders hohe Messempfindlichkeit ergibt sich dabei dann, wenn der Messwellenleiter auch in dem nicht belasteten bzw. nicht belegten Zustand doppelbrechend ist und eine Länge hat, die mehreren Schwebungslängen zwischen Lichtanteilen verschiedener Polarisation entspricht. Dabei sei als Schwebungslänge die Länge einer Strecke bezeichnet, längs derer sich zwischen den Lichtanteilen der beiden Polarisationen ein relativer Phasenversatz von genau 2π ergibt.

Von besonderem Vorteil ist es, wenn der Messwellenleiter einmodig ausgeführt wird, also so, dass er für jede der beiden Polarisationen nur jeweils einer Mode zu propagieren erlaubt. Dadurch lassen sich Dispersionen zwischen verschiedenen Moden gleicher Polarisationen vermeiden, was wiederum eine hohe Messgenauigkeit möglich macht. Aus dem gleichen Grund ist es von Vorteil, wenn die die Arme der Auswerteeinheit bildenden Wellenleiter und vorzugsweise alle Wellenleiter der Sensoranordnung zumindest streckenweise einmodig ausgeführt sind. In jedem Fall sollten alle Wellenleiter der Sensoranordnung mit Ausnahme des Polarisationskonverters möglichst polarisationserhaltend sein.

Mindestens einer der optischen Arme der Auswerteeinheit kann auch einen Phasenschieber umfassen. Dieser kann realisiert werden z.B. durch Ausnutzung einer Abhängigkeit zwischen Brechungsindex eines Wellenleiterkerns und einem dort herrschenden elektrischen Feld, das wiederum einstellbar sein kann durch eine an Elektroden in einer Umgebung des Wellenleiterkerns anlegbare Steuerspannung.

Der polarisierende Strahlteiler lässt sich konstruktiv einfach in Form eines Richtkopplers mit zwei längs einer Koppelstrecke parallel zueinander verlaufenden Wellenleiterabschnitten realisieren, wobei diese Wellenleiterabschnitte unterschiedliche Querschnitte aufweisen können, um Licht verschiedener Polarisation zu favorisieren. Alternativ oder zusätzlich kann auch einer dieser Wellenleiterabschnitte an einer Seite - z.B. oben - eine metallische Beschichtung tragen, durch die TM-polarisierte Lichtanteile unterdrückt werden. Alternativ kann der Strahlteiler auch als Y-Teiler mit Ausgängen unterschiedlicher Querschnitte oder als Multimoden-Interferenz-Koppler (MMI) ausgeführt werden.

Der optische Koppler wiederum kann durch ein optisches Viertor gegeben sein und typischerweise ebenfalls als Richtkoppler ausgeführt sein. Eine zuverlässige Detektion eines relativen Phasenversatzes zwischen Lichtanteilen, die ursprünglich unterschiedliche Polarisationen hatten, wird dann möglich, indem jeder von zwei Ausgängen des Kopplers mit jeweils einem lichtempfindlichen Element verbunden wird. Elektrische Ausgänge dieser lichtempfindlichen Elemente können dazu mit Eingängen eines Differenzverstärkers verbunden sein.

Der Polarisationskonverter kann passiv, also ohne Elektroden, ausgeführt werden und dazu z.B. durch einen Wellenleiter mit sich längs eines Verlaufs des Wellenleiters ändernder Querschnittsform gegeben sein. Auch das trägt zu einem einfachen Aufbau und einer geringen Störanfälligkeit bei.

Schließlich kann die Sensoranordnung auch mehrere Messwellenleiter umfassen, die optisch mit dem Eingang des Strahlteilers verbunden oder wahlweise, z.B. mittels optischer Schalter, mit dem Strahlteiler verbindbar sind. Dann genügt eine einzige Auswerteeinheit zum Auslesen vieler Sensoren, die jeweils durch einen entsprechend gestalteten Wellenleiter gegeben und daher selbst sehr einfach aufgebaut sein können. Dabei können die verschiedenen Messwellenleitern an unterschiedlichen Orten angeordnet und/oder für unterschiedliche Substanzen oder Messgrößen empfindlich sein.

Ausführungsbeispiele der Erfindung werden nachfolgend anhand der Figuren 1 bis 4 beschrieben. Es zeigen
- Fig. 1: eine schematische Darstellung einer optischen Sensoranordnung,
- Fig. 2: einen perspektivisch dargestellten Ausschnitt eines Messwellenleiters der Sensoranordnung aus Fig. 1 mit einem Querschnitt dieses Messwellenleiters,
- Fig. 3: in einer der Fig. 2 entsprechenden Darstellung ein Messwellenleiter für eine Abwandlung dieser Sensoranordnung,
- Fig. 4: eine Aufsicht auf einen polarisierenden Strahlteiler aus der in Fig. 1 gezeigten Sensoranordnung und
- Fig. 5: einen perspektivisch dargestellten Ausschnitt eines Wellenleiters, der einen Polarisationskonverter aus dieser Sensoranordnung bildet, wobei insbesondere ein Querschnitt dieses Wellenleiters zu erkennen ist.

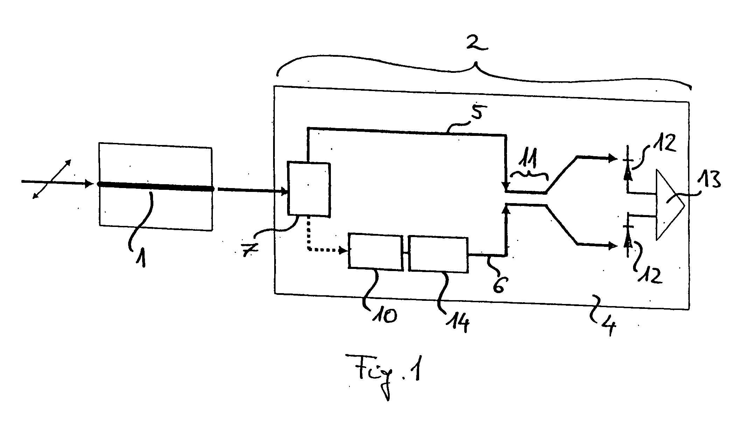

In Fig. 1 ist eine schematisierte Aufsicht auf eine optische Sensoranordnung gezeigt, die als Biosensor einsetzbar und zum Detektieren einer Konzentration eines bestimmten Stoffes geeignet ist. In einer Abwandlung eignet sich diese Sensoranordnung auch für ein Erfassen einer mechanischen Belastung. Die abgebildete Sensoranordnung umfasst einen Messwellenleiter 1 und eine vom Messwellenleiter 1 räumlich getrennt angeordnete und durch einen polarisationserhaltenden Wellenleiter mit diesem verbundene optische Auswerteeinheit 2.

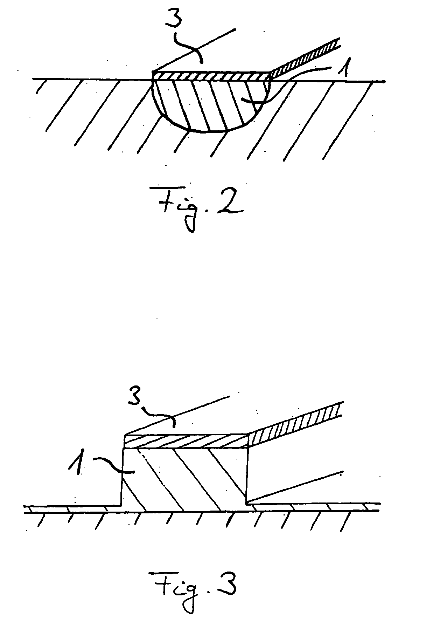

Der Messwellenleiter 1, von dem in Fig. 2 ein Ausschnitt abgebildet ist, ist einmodig und doppelbrechend ausgeführt und weist eine in Abhängigkeit von einer Messgröße veränderliche Doppelbrechung auf. Als Messgröße dient dabei die Konzentration des zu detektierenden Stoffes. Dazu trägt ein Kern des in einen Chip eingebetteten Messwellenleiters 1 eine als Dünnschicht ausgeführte selektive Schicht 3, die ausgelegt ist zum selektiven Anlagern des zu detektierenden Stoffes. Dabei ist die selektive Schicht 3 nur auf einer Oberseite des Messwellenleiters 1 aufgetragen, so dass ein Anlagern des Stoffes auf einen Brechungsindex für einen TM-polarisierten Anteil eines im Messwellenleiter 1 propagierenden Lichtbündels einen anderen Einfluss hat als auf einen davon abweichenden Brechungsindex für einen TE-polarisierten Anteil dieses Lichtbündels.

Der in Fig. 2 gezeigte Messwellenleiter 1 des vorliegenden Ausführungsbeispiels weist einen in den genannten Chip eingebetteten Kern auf, wobei der Chip aus optisch einachsigem Lithiumniobat gebildet ist und der Kern durch in dieses Lithiumniobat eindiffundiertes Titan, also durch eine Titan-Dotierung, realisiert ist. Dadurch und wegen seines anisotropen Querschnitts ist der Messwellenleiter 1 bereits in einem nicht belegten Zustand doppelbrechend, wobei eine optische Hauptachse senkrecht auf einer durch den Chip aufgespannten Chipebene und senkrecht auf einer Längsachse des Messwellenleiters 1 steht, während eine zweite optische Hauptachse senkrecht zur Längsachse des Messwellenleiters 1 und parallel zur Chipebene liegt. Zwischen Lichtanteilen mit TE- und TM-Polarisation ergibt sich so eine Schwebungslänge oder Beatlänge von einigen 10 µm bis einigen 100 µm, wobei eine durch die Ausdehnung der selektiven Schicht 3 definierte Länge des Messwellenleiters 1 mehreren Schwebungslängen entspricht.

Bei einer in Fig. 3 gezeigten anderen Ausführung ist der Messwellenleiter 1 als Rippenwellenleiter ausgeführt - z.B. aus Silizium - und durch eine z.B. aus Siliziumdioxid gebildete Pufferschicht von einem in Fig. 3 nicht gezeigten Trägermaterial - z.B. ebenfalls Silizium - getrennt.

In der Abwandlung, in der die Sensoranordnung zum Messen mechanischer Belastungen geeignet sein soll, oder wenn eine Anlagerung des zu detektierenden Stoffes eine mechanische Deformation hervorrufen soll, kann der Messwellenleiter 1 auch zumindest streckenweise frei schwebend ausgeführt und dazu stellenweise unterätzt sein. Auf die selektive Schicht 3 kann verzichtet werden, wenn nur mechanische Belastungen detektierbar sein sollen.

Auch bei einer Verwendung eines optisch isotropen Materials für den Kern des Messwellenleiters 1 kann dieser die gewünschten Eigenschaften haben, wenn sein Querschnitt hinreichend anisotrop ist. So könnte der Messwellenleiter 1 auch z.B. aus Silizium oder Si(O)Nₓ gebildet und z.B. ausgesprochen flach ausgeführt sein. Durch eine mechanische Vorspannung des Kerns des Messwellenleiters 1 kann seine doppelbrechende Eigenschaft noch verstärkt werden.

Die Sensoranordnung aus Fig. 1 umfasst eine dort selbst nicht abgebildete Lichtquelle zum Einspeisen von monochromatischem polarisierten Licht in den Messwellenleiter 1, die dazu einen Polarisator aufweisen kann so ausgeführt und angeordnet ist, dass das in den Messwellenleiter 1 eingespeiste Licht eine um 45° gegenüber den beiden Hauptachsen geneigte und in Fig. 1 durch einen Doppelpfeil veranschaulichte lineare Polarisation hat. Das in den Messwellenleiter 1 eingespeiste Licht enthält also einen TE-Anteil und einen TM-Anteil gleicher Intensität.

Die Auswerteeinheit 2 ist als integrierte Optik auf einem einzigen aus einem Silizium- oder Lithiumniobat-Wafer gewonnenen Substrat 4 realisiert. Mit einem ersten optischen Arm 5 und einen zweiten optischen Arm 6 weist die Auswerteeinheit 2 zwei optische Pfade auf, die jeweils durch einmodige Wellenleiter gebildet sind und zusammen einen Mach-Zehnder-Interferometer bilden. Die genannten Wellenleiter weisen in das Substrat 4 eingebettete auf oder im Fall der Ausführung auf Si-Basis rippenförmige Wellenleiterkerne, die von dem Substrat 4 durch eine Pufferschicht getrennt oder in dieses eingebettet sind. Die Auswerteeinheit 2 kann z.B. in SOI-Technik ausgeführt sein.

Die beiden Arme 5 und 6 gehen von einem polarisierenden Strahlteiler 7 aus, in den das den Messwellenleiter 1 verlassende Licht eingespeist wird. Bei dem Strahlteiler 7 handelt es sich um einen TE/TM-Splitter, so dass der TM-polarisierte Anteil des Lichts in den ersten Arm 5 und der TE-polarisierte Anteil in den zweiten Arm 6 geleitet wird. Bei dem vorliegenden Beispiel seien dabei der den Messwellenleiter 1 tragende Chip und das Substrat 4 der Auswerteeinheit 2 koplanar angeordnet.

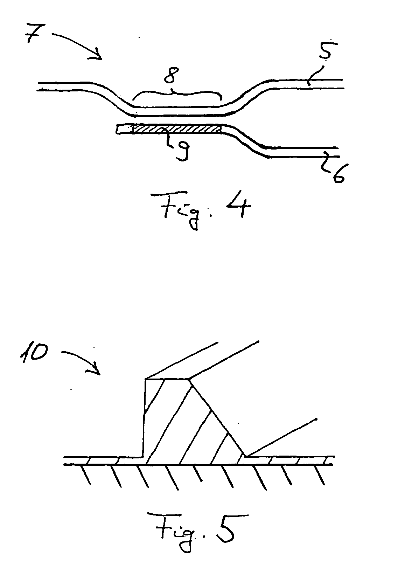

In Fig. 4 ist eine detaillierte Aufsicht auf den Strahlteiler 7 gezeigt, die erkennen lässt, das dieser durch einen Richtkoppler realisiert ist mit zwei längs einer Koppelstrecke 8 parallel zueinander verlaufenden Wellenleiterabschnitten, von denen einer an einer Oberseite eine schraffiert dargestellte Beschichtung 9 aus Gold trägt, aufgrund derer nur der TE-polarisierte Anteil in diesen Wellenleiterabschnitt übergekoppelt wird. Alternativ oder zusätzlich zu der Beschichtung 9 eines der Wellenleiterabschnitte können die beiden Wellenleiterabschnitte auch mit derart unterschiedlichen Querschnitten ausgeführt sein, dass der Effekt eines TE/TM-Modensplitting erzielt wird.

Innerhalb des zweiten optischen Arms 6 ist ein als passiver TE/TM-Modenkonverter ausgeführter Polarisationskonverter 10 angeordnet ist. Der Polarisationskonverter 10, von dem ein Ausschnitt in Fig. 5 dargestellt ist, ist durch einen Wellenleiter gegeben, der längs eines Verlaufs wechselnde Querschnittsformen der in Fig. 5 erkennbaren Art aufweist. Dadurch wird zumindest ein Teil des im zweiten Arm 6 transportierten Lichts so konvertiert, dass es eine TM-Polarisation erhält und dadurch mit dem durch den ersten Arm 5 geleiteten Licht interferieren kann. Selbstverständlich könnten die Polarisationen der genannten Anteile des Lichts auch vertauscht sein. Es kann also auch ein TE-Anteil durch den ersten Arm 5 geleitet und ein TM-Anteil in den zweiten Arm 6 gelenkt werden, der dann durch den Polarisationskonverter 10 zumindest teilweise in eine TE-Mode zu konvertieren wäre.

Zum Zusammenführen von in den zwei Armen 5 und 6 geführtem Licht weist die Auswerteeinheit 2 einen optischen Koppler 11 auf, der durch einen Richtkoppler gegeben und als optisches Viertor ausgeführt ist, wobei jeder von zwei Ausgängen dieses Kopplers 11 mit jeweils einem lichtempfindlichen Element 12 verbunden ist. Elektrische Ausgänge dieser lichtempfindlichen Elemente 12 wiederum sind mit zwei Eingängen eines Differenzverstärkers 13 verbunden. Damit kann eine relative Phasenlage zwischen den beiden Anteilen des durch den Messwellenleiter 1 und die beiden Arme 5 bzw. 6 hindurchgeleiteten Lichts, die von der Messgröße abhängt, durch Auswerten einer Intensitätsverteilung an den Ausgängen des einen 3dB-Koppler bildenden Kopplers 11 ermittelt werden.

Um diese Ermittlung der relativen Phasenlage zu erleichtern, umfasst der zweite optische Arm 6 schließlich auch einen zwischen dem Strahlteiler 7 und dem Koppler 11 angeordneten Phasenschieber 14, mit dem die relative Phasenlage in Abhängigkeit von einer zwischen zwei Elektroden anlegbaren Steuerspannung verändert werden, also z.B. eine im Messwellenleiter 1 aufgetretene Verschiebung der relativen Phasenlage kompensiert werden kann. Eine Phasenverschiebung geschieht dabei im Phsenschieber 14 unter Ausnutzung einer Abhängigkeit zwischen dem Brechungsindex eines Wellenleiterkerns des Phasenschieber 14 und einem dort herrschenden elektrischem Feld.

In einer Weiterbildung kann die in Fig. 1 schematisch veranschaulichte Sensoranordnung auch mehrere Messwellenleiter 1 aufweisen, die optisch mit dem Eingang des Strahlteilers 7 verbunden oder, z.B. mittels optischer Schalter, wahlweise mit diesem verbindbar und dadurch nacheinander auslesbar sind. Ein Sensorteil, das einen oder mehrere solcher Messwellenleiter 1 enthält, kann kostengünstig auch als Array hergestellt werden, z.B. mit an sich bekannter CMOS-Technologie oder in Lithiumniobat-Technologie.

Eine Empfindlichkeit des vorgeschlagenen Systems ist durch eine entsprechende Vorwahl einer Sensorlänge, also einer Länge des Messwellenleiters 1, und eine sich damit ergebende Anzahl von TE/TM-Beatlängen für verschiedene Messaufgaben adaptierbar. Das gleiche gilt für den Einsatz entsprechend auszuwählender, aus dem Stand der Technik bekannter selektiver Dünnschichten auf dem Messwellenleiter 1.

Zum Detektieren des Stoffes - bzw. in der genannten Abwandlung zum Detektieren der Belastung - mit der beschriebenen Sensoranordnung wird also das Licht mit den zwei Anteilen verschiedener Polarisationen in den Messwellenleiter 1 eingespeist, der für diese Polarisationen eine in Abhängigkeit von der Messgröße veränderliche Doppelbrechung zeigt. Nach einem Verlassen des Messwellenleiters 1 werden die beiden Anteile getrennt und durch die zwei verschiedenen optischen Arme 5 und 6 geleitet. Die Polarisation des durch den zweiten Arm 6 geleiteten Anteils wird mit dem Polarisationskonverter 14 so geändert, dass an einem Ausgang dieses Arms 6 und des anderen Arms 5 Licht mit Komponenten gleicher Polarisation austritt. Am Ausgang der beiden Arme 5 und 6 werden die beiden Anteil mittels des Kopplers 11 überlagert, worauf durch Intensitätsmessung einer Überlagerung der beiden Anteile eine im Messwellenleiter 1 zustande gekommene Phasenverschiebung - also eine Verschiebung einer relativen Phasenlage zwischen den beiden Anteilen - detektiert wird, die auf die Messgröße schließen lässt.

## Patentansprüche

1. Optische Sensoranordnung, umfassend einen Messwellenleiter (1), der eine in Abhängigkeit von einer Messgröße veränderliche Doppelbrechung zeigt, sowie eine optische Auswerteeinheit (2) mit zwei optischen Armen (5, 6), wobei die Auswerteeinheit (2) einen polarisierenden Strahlteiler (7) umfasst, von dem die genannten optischen Arme (5, 6) ausgehen, und wobei der Messwellenleiter (1) einem optischen Eingang des polarisierenden Strahlteilers (7) vorgeschaltet ist,
**dadurch gekennzeichnet,**
**dass** die Auswerteeinheit (2) einen optischen Koppler (11) zum Zusammenführen von in den zwei optischen Armen (5, 6) geführtem Licht aufweist und an mindestens einem Ausgang des Kopplers (11) mindestens ein mit diesem optisch verbundenes lichtempfindliches Element (12) vorgeschen ist, wobei die beiden optischen Arme (5, 6) durch Wellenleiter realisiert sind und einen Mach-Zehnder-Interferometer bilden, wobei in einem Verlauf eines der optischen Arme (5, 6) ein Polarisationskonverter (10) angeordnet ist.

2. Sensoranordnung nach Anspruch 1, **dadurch gekennzeichnet, dass** zumindest die Auswerteeinheit (2) als integrierte Optik ausgeführt ist, wobei der Strahlteiler (7), die optischen Arme (5, 6) mit dem Polarisationskonverter (10) und der Koppler (11) auf einem gemeinsamen planaren Substrat (4) angeordnet sind.

3. Sensoranordnung nach einem der Ansprüche 1 oder 2, **dadurch gekennzeichnet, dass** der Messwellenleiter (1) eine selektive Schicht (3) zum Anlagern eines zu detektierenden Stoffes trägt.

4. Sensoranordnung nach einem der Ansprüche 1 oder 2, **dadurch gekennzeichnet, dass** der Messwellenleiter (1) zumindest streckenweise frei schwebend ausgeführt ist zur Erfassung einer mechanischen Belastung.

5. Sensoranordnung nach einem der Ansprüche 1 bis 4, **dadurch gekennzeichnet, dass** ein Kern des Messwellenleiters (1) aus einem optisch einachsigen Material gebildet ist und/oder einen anisotropen Querschnitt hat.

6. Sensoranordnung nach einem der Ansprüche 1 bis 5, **dadurch gekennzeichnet, dass** der Messwellenleiter (1) auch in einem nicht belasteten und/oder nicht belegten Zustand doppelbrechend ist und eine Länge hat, die mehreren Schwebungslängen zwischen Lichtanteilen verschiedener Polarisation entspricht.

7. Sensoranordnung nach einem der Ansprüche 1 bis 6, **dadurch gekennzeichnet, dass** sie ferner eine Lichtquelle zum Einspeisen von polarisiertem Licht in den Messwellenleiter (1) aufweist, die so ausgeführt und angeordnet ist, dass das in den Messwellenleiter (1) eingespeiste Licht Anteile zweier derart verschiedener Polarisationen enthält, dass in jeden der beiden Arme (5, 6) der Auswerteeinheit (2) durch den Strahlteiler (7) jeweils einer dieser Anteile geleitet wird.

8. Sensoranordnung nach einem der Ansprüche 1 bis 7, **dadurch gekennzeichnet, dass** der Messwellenleiter (1) und/oder die die Arme (5, 6) der Auswerteeinheit bildenden Wellenleiter einmodig ausgeführt sind.

9. Sensoranordnung nach einem der Ansprüche 1 bis 8, **dadurch gekennzeichnet, dass** einer der optischen Arme (5, 6) einen Phasenschieber (14) umfasst.

10. Sensoranordnung nach einem der Ansprüche 1 bis 9, **dadurch gekennzeichnet, dass** der polarisierende Strahlteiler (7) durch einen Richtkoppler realisiert ist mit zwei längs einer Koppelstrecke (8) parallel zueinander verlaufenden Wellenleiterabschnitten, die unterschiedliche Querschnitte aufweisen und/oder von denen einer eine metallische Beschichtung (9) trägt.

11. Sensoranordnung nach einem der Ansprüche 1 bis 10, **dadurch gekennzeichnet, dass** der optische Koppler (11) durch ein optisches Viertor gegeben ist, wobei jeder von zwei Ausgängen des Kopplers (11) mit jeweils einem lichtempfindlichen Element (12) verbunden ist.

12. Sensoranordnung nach einem der Ansprüche 1 bis 11, **dadurch gekennzeichnet, dass** der Polarisationskonverter (10) passiv ausgeführt ist.

13. Sensoranordnung nach einem der Ansprüche 1 bis 12, **dadurch gekennzeichnet, dass** sie mehrere Messwellenleiter (1) umfasst, die optisch mit dem Eingang des Strahlteilers (7) verbunden oder wahlweise mit diesem verbindbar sind.

14. Detektionsverfahren zum Detektieren eines Stoffes und/oder einer mechanischen Belastung, bei dem Licht mit zwei Anteilen verschiedener Polarisationen in einen Messwellenleiter (1) eingespeist wird, der für diese Polarisationen eine in Abhängigkeit von einer Anlagerung des Stoffes und/oder der mechanischen Belastung veränderliche Doppelbrechung zeigt, wobei die zwei Anteile nach einem Verlassen des Messwellenleiters (1) getrennt und durch zwei verschiedene optische Arme (5, 6) geleitet werden und eine Phasenverschiebung zwischen den beiden Anteilen ermittelt wird,
**dadurch gekennzeichnet,**
**dass** die Polarisation zumindest eines der genannten Anteile in einem der Arme (6) geändert wird, wobei die beiden Anteile an einem Ausgang der beiden Arme (5, 6) überlagert werden und die Phasenverschiebung zwischen den beiden Anteilen durch Intensitätsmessung einer Überlagerung der beiden Anteile detektiert wird.

15. Verwendung einer Sensoranordnung nach einem der Ansprüche 1 bis 13 zur Durchführung eines Detektionsverfahrens nach Anspruch 14.

## Claims

1. An optical sensor arrangement, comprising a measurement waveguide (1) which displays a double refraction which changes in dependence on a measured variable, as well as an optical evaluation unit (2) with two optical arms (5 6), wherein the evaluation unit (2) comprises a polarising beam splitter (7), from which the mentioned optical arms (5, 6) depart, and wherein the measurement waveguide (1) is connected in front of an optical input of the polarising beam splitter (7),
**characterised in that**
the evaluation unit (2) coprises an optical coupler (11) for leading together light which is lead in the two arms (5, 6) and at at least one output of the coupler (11) at least one light-sensitive element (12) is provided, which is optically connected to this output, wherein the two optical arms (5, 6) are realised by waveguides and form a Mach-Zehnder interferometer, wherein a polarisation converter (10) is arranged in a couse of one of the optical arms (5, 6).

2. A sensor arrangement according to claim 1, **characterised in that** at least the evaluation unit (2) is designed as integrated optics, wherein the beam splitter (7), the optical arms (5, 6) with the polarisation converter (10), and the coupler (11) are arranged on a common planar substrate (4).

3. A sensor arrangement according to one of claims 1 or 2, **characterised in that** the measurement waveguide (1) carries a selective layer (3) for the accumulation of a substance to be detected.

4. A sensor arrangement according to one of claims 1 or 2, **characterised in that** the measurement waveguide (1) at least in sections is designed in a free-floating manner for detecting a mechanical loading.

5. A sensor arrangement according to one of claims 1 to 4, **characterised in that** a core of the measurement waveguide (1) is formed from an optically single-axis material and/or has an anisotropic cross section.

6. A sensor arrangement according to one of claims 1 to 5, **characterised in that** the measurement waveguide (1) is double-refractive also in a non-loaded and/or non-occupied condition and has a length which corresponds to several beat lengths between light shares of different polarisation.

7. A sensor arrangement according to one of claims 1 to 6, **characterised in that** it further comprises a light source for feeding polarised light into the measurement waveguide (1), said light source being designed and arranged such that the light which is fed into the measurement waveguide (1) contains shares of two polarisations which are so different that in each case one of these shares is led into each of the two arms (5, 6) of the evaluation unit (2) by the beam splitter (7).

8. A sensor arrangement according to one of claims 1 to 7, **characterised in that** the measurement waveguide (1) and/or the waveguides forming the arms (5, 6) of the evaluation unit are designed in a single-mode manner.

9. A sensor arrangement according to one of claims 1 to 8, **characterised in that** one of the optical arms (5, 6) comprises a phase-shifter (14).

10. A sensor arrangement according to one of claims 1 to 9, **characterised in that** the polarising beam splitter (7) is realised by a directional coupler with waveguide sections which run parallel to one another along a coupling section (8) and which have different cross sections and/or of which one carries a metallic coating (9).

11. A sensor arrangement according to one of claims 1 to 10, **characterised in that** the optical coupler (11) is given by an optical four-point network, wherein each of two outputs of the coupler (11) is connected in each case to a light-sensitive element (12).

12. A sensor arrangement according to one of claims 1 to 11, **characterised in that** the polarisation converter (10) is designed in a passive manner.

13. A sensor arrangement according to one of claims 1 to 12, **characterised in that** it comprises several measurement waveguides (1) which are optically connected to the input of the beam splitter (7) or may be selectively connected to this.

14. A detection method for detecting a substance and/or a mechanical load, with which light with two shares of different polarisation is fed into a measurement waveguide (1) which for these polarisations displays a double refraction which changes in dependence on an accumulation of the substance and/or the mechanical loading, wherein the two shares are separated after leaving the measurement waveguide (1) and are led through two different optical arms (5, 6) and a phase shift between the two shares is detected,
**characterised in that**
the polarisation at least of one of said shares is changed in one of the arms (6), wherein the two shares at an output of the two arms (5, 6) are superimposed and the phase shift between the two shares is detected by way of intensity measurement of a superposition of the two shares.

15. The use of a sensor arrangement according to one of claims 1 to 13, for carrying out a detection method according to claim 14.

## Revendications

1. Agencement de détection optique, comportant un guide d'ondes de mesure (1) possédant une biréfringence variable fonction d'une grandeur de mesure, ainsi qu'une unité d'analyse (2) optique avec deux bras (5, 6) optiques, dans lequel l'unité d'analyse (2) comprend un séparateur de faisceaux (7) polarisant, à partir duquel partent lesdits bras (5, 6) optiques, dans lequel le guide d'ondes de mesure (1) est monté en amont d'une entrée optique du séparateur de faisceaux (7) polarisant,
**caractérisé en ce que**
l'unité d'analyse (2) présente un coupleur (11) optique pour faire converger la lumière guidée dans les deux bras (5, 6) optiques, et au niveau d'au moins une sortie du coupleur (11) est prévu au moins un élément (12) sensible à la lumière, relié optiquement audit coupleur, dans lequel les deux bras (5, 6) optiques sont réalisés par des guides d'ondes et forment un interféromètre de Mach-Zehnder, dans lequel un convertisseur de polarisation (10) est agencé dans le tracé d'un des bras (5, 6) optiques.

2. Agencement de détection selon la revendication 1, **caractérisé en ce qu'**au moins l'unité d'analyse (2) est réalisée sous la forme d'une optique intégrée, dans lequel le séparateur de faisceaux (7), les bras (5, 6) optiques avec le convertisseur de polarisation (10) et le coupleur (11) sont agencés sur un substrat (4) planaire commun.

3. Agencement de détection selon la revendication 1 ou 2, **caractérisé en ce que** le guide d'ondes de mesure (1) porte une couche sélective (3) pour y déposer une matière à détecter.

4. Agencement de détection selon la revendication 1 ou 2, **caractérisé en ce que** le guide d'ondes de mesure (1) est configuré au moins par sections en suspension libre pour détecter une sollicitation mécanique.

5. Agencement de détection selon l'une quelconque des revendications 1 à 4, **caractérisé en ce qu'**un noyau du guide d'ondes de mesure (1) est formé par un matériau à un seul axe optique et/ou présente une coupe transversale anisotrope.

6. Agencement de détection selon l'une quelconque des revendications 1 à 5, **caractérisé en ce que** le guide d'ondes de mesure (1), même à l'état non sollicité et/ou à l'état non chargé, est biréfringent et a une longueur qui correspond à plusieurs longueurs de battement entre des fractions de lumière de polarisation différente.

7. Agencement de détection selon l'une quelconque des revendications 1 à 6, **caractérisé en ce qu'**il présente en outre une source lumineuse, qui permet d'injecter une lumière polarisée dans le guide d'ondes de mesure (1) et qui est configurée et agencée de telle sorte que la lumière injectée dans le guide d'ondes de mesure (1) contient des fractions à deux polarisations différentes telles que respectivement une de ces fractions est guidée dans chacun des deux bras (5, 6) de l'unité d'analyse (2) via le séparateur de faisceaux (7).

8. Agencement de détection selon l'une quelconque des revendications 1 à 7, **caractérisé en ce que** le guide d'ondes de mesure (1) et/ou les guides d'ondes formant les bras (5, 6) de l'unité d'analyse sont des guides d'ondes monomodes.

9. Agencement de détection selon l'une quelconque des revendications 1 à 8, **caractérisé en ce que** l'un des bras (5, 6) optiques comporte un déphaseur (14).

10. Agencement de détection selon l'une quelconque des revendications 1 à 9, **caractérisé en ce que** le séparateur de faisceaux (7) polarisant est formé par un coupleur directif avec deux sections de guides d'ondes se déroulant parallèlement entre elles le long d'une trajectoire de couplage (8), qui présentent des coupes transversales différentes et/ou dont l'une porte un revêtement (9) métallique.

11. Agencement de détection selon l'une quelconque des revendications 1 à 10, **caractérisé en ce que** le coupleur optique (11) est formé par un élément optique à quatre accès, dans lequel chacune des deux sorties du coupleur (11) est reliée respectivement à un élément (12) sensible à la lumière.

12. Agencement de détection selon l'une quelconque des revendications 1 à 11, **caractérisé en ce que** le convertisseur de polarisation (10) est un convertisseur passif.

13. Agencement de détection selon l'une quelconque des revendications 1 à 12, **caractérisé en ce qu'**il comprend plusieurs guides d'ondes de mesure (1) qui sont reliés optiquement à l'entrée du séparateur de faisceaux (7) ou peuvent être reliés au choix à celui-ci.

14. Agencement de détection destiné à détecter une matière et/ou une sollicitation mécanique, selon lequel une lumière avec deux fractions à polarisation différente est injectée dans un guide d'ondes de mesure (1) qui, pour ces polarisations, possède une biréfringence variable en fonction d'un dépôt de la matière et/ou de la sollicitation mécanique, dans lequel les deux fractions sont séparées après leur sortie du guide d'ondes de mesure (1) et sont guidées à travers deux bras (5, 6) optiques différents, et un décalage de phase entre les deux fractions est calculé,
**caractérisé en ce que** la polarisation d'au moins une desdites fractions est modifiée dans l'un des bras (6), dans lequel les deux fractions interférant entre elles au niveau d'une sortie des deux bras (5, 6) et le décalage de phase entre les deux fractions est détecté par la mesure de l'intensité d'une interférence des deux fractions.

15. Utilisation d'un agencement de détection selon l'une quelconque des revendications 1 à 13, destiné à la mise en oeuvre d'un procédé de détection selon la revendication 14.
